# EUROPEAN PATENT SPECIFICATION

(11) **EP 0 865 203 B1**
(45) Date of publication and mention of the grant of the patent: **24.10.2007**
(21) Application number: 98301758.3
(22) Date of filing: 10.03.1998
(51) Int. Cl.: H04N 5/44

(54) **Data reception device and method**
Verfahren und Vorrichtung zum Empfangen von Daten
Procédé et dispositif de réception de données

(30) Priority: 13.03.1997 JP 5915597
(43) Date of publication of application: 16.09.1998
(73) Proprietor: Sony Corporation, Tokyo 141 (JP)
(72) Inventor: Yuzawa, Keiji, Shinagawa-ku, Tokyo 141 (JP)
(74) Representative: Turner, James Arthur

(56) References cited:
- EP-A- 0 655 862
- EP-A- 0 710 025
- WO-A-97/03509
- WO-A-97/07634
- PATENT ABSTRACTS OF JAPAN vol. 1997, no. 04, 30 April 1997 (1997-04-30) & JP 08 331519 A (MATSUSHITA ELECTRIC IND CO LTD), 13 December 1996 (1996-12-13)

## Description

The present invention relates to data reception devices and methods.

In recent years, a digital broadcast system which transmits an image signal, an audio signal, or the like by using a communication satellite has been practically used.

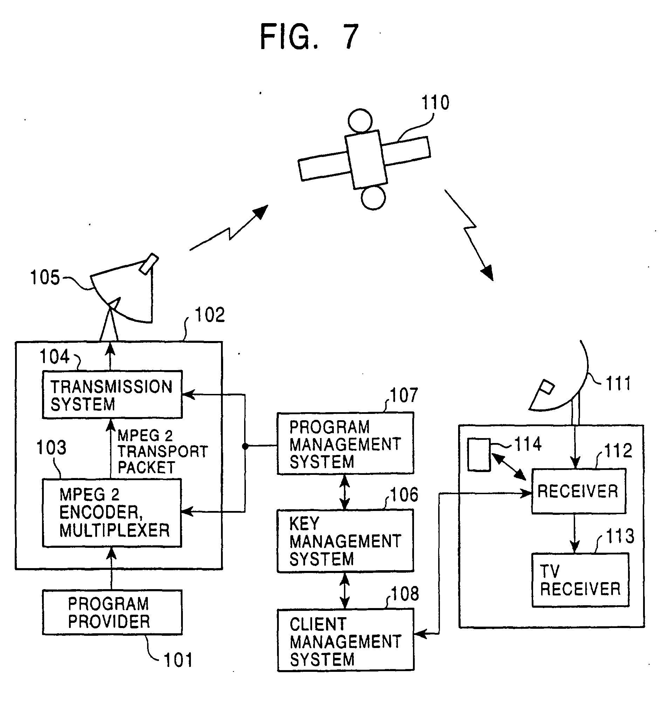

FIG. 7 of the accompanying drawings shows the outline of a previously proposed digital broadcast system. The program transmission side is constituted by an up-link station, a program provider, and a management system.

Video/audio data from a program provider 101 is supplied to an encoder, multiplexer 103 of MPEG (Moving Pictures Expert Group)2 of an up-link station 102. The video/audio data is compressed in the MPEG2 encoder, multiplexer 103, and the compressed video/audio data is filled in a packet having a length of 188 bytes. A plurality of programs and packets of video/audio data corresponding to the programs are multiplexed to form a transport packet of MPEG2. A large number of transport packets are connected to each other to form a transport stream. The number of transport streams corresponds to the number of transponders mounted on a communication satellite.

The MPEG2 transport stream is supplied to a transmission system 104. In the transmission system 104, processes such as a scramble process for each packet, error correction coding for each packet, and modulation are performed, and a modulated output to a transmission antenna 105. The scramble process is required to realize conditional access used to control the audiovisual quality for each viewer. For example, a pay-per view contract in which only a certain program is watched every paying is made possible. A key for canceling the scramble is supplied from a key management system 106 to the MPEG2 encoder, multiplexer 103, and is inserted into the transport stream as one of packets like video/audio information.

The MPEG2 packets are integrally managed by a program management system 107. The program management system 107 is coupled to the key management system 106 to encode a key for canceling scramble. A client management system 108 is arranged to manage items or the like related to audiovisual contracts. Accounting information is transmitted between the client management system 108 and the house of a viewer through a telephone line 109.

Broadcast radio wave is transmitted from the transmission antenna 105 and received by a reception antenna 111 of each house through a communication satellite 110. A receiver 112 is connected to the reception antenna 111. The receiver 112 is constituted by a tuner for designating a reception transponder, a demodulator, a scramble unit for canceling scramble, a demultiplexer for designating separate packets, a video decoder, an audio decoder, and the like. Decoded video/audio signals are supplied to a television receiver 113.

A key for canceling scramble is encoded and transmitted as relevant information together with video/voice. The key for solving cryptography is stored in an IC card 114 inserted in the receiver 112. Program scrambles which can be solved by a transmission side can be controlled by the transmission side on the basis of the contract information of each reception system. A receiver having a conditional access function is called an IRD (Integrated Receiver/Decoder).

The above digital satellite broadcast system has only just begun to be practically used, and a program for controlling a recent receiver on a reception side may be variably changed. This change generally has an object to provide new services and additional values to clients. Several methods can be effective as countermeasures against the change in program.

For example, when a program ROM built in a receiver is replaced with another one, or the receiver is entirely replaced with another one, a countermeasure against the change in program can be made. When an IC card in which a new program is stored is distributed to a client by using the interface, for an IC card, arranged in the receiver, the new program can be loaded from the IC card. However, when a large number of receivers which have been arranged, it is difficult to replace the ROMs of the receivers and collect the receivers. In addition, a method of distributing IC cards requires high cost. Since each IC card has a relatively small memory capacity, the IC card cannot easily store a program.

As a method of solving the above problem, the following method has been provided. That is, latest program information is received from a transmission side as broadcast wave, and this program is loaded on a receiver on a reception side. More specifically, program data is inserted into a stream transmitted by satellite broadcast using, e.g., the MPEG2 system, and the program data is downloaded on the receiver side. The downloaded program data is temporarily written in, e.g., a RAM built in the receiver, and the program data is transferred from the RAM to a flash memory, thereby updating the program.

When program data to be written is divided into small units (e.g., 64 kbytes), and a writing process is performed every unit, the capacity of the RAM for temporarily storing a program is reduced. With respect to the flash memory, an old program data is temporality erased, and new program data is written in a portion where the program data is erased, so that the capacity of the flash memory is reduced.

The above method for a program data updating process has the following problem. That is, when an updating process is started, both old and new programs are kept incomplete until the entire storage area of a flash memory to be updated is correctly updated.

In a process of updating a large part (e.g., several Mbytes) of program data, an amount of program data increases, and a long reception time, e.g., about several minutes to several tens minutes, is required for the updating process. Therefore, due to degradation of radio wave conditions caused by rain or the like during a download process of the program data, a risk that the program data cannot be partially acquired arises. In this case, the download process is interrupted until the radio wave conditions are recovered.

As described above, when a program updating operation is started when the radio wave state is unstable, due to degradation of the radio wave state during the updating operation, the updating operation cannot easily continue. A problem that downloading for the program is not completed until the radio wave state is recovered arise. In the state wherein the program is not completed, the receiver cannot be correctly operated.

International (PCT) Patent Application Publication No WO-A-96/17473 discloses a television system with an electronic program guide function. The input signal may come from a satellite and may include updates for application software used by a processor in the TV receiver. When the application software update is received, it is stored in a DRAM and is then checked for accuracy, for example using a checksum analysis or another verification routine. If the accuracy of the software is verified, the update is then transferred to an EEPROM to replace application software resident there.

The present invention provides a data reception device according to claim 1 hereof and a data reception method according to claim 3 hereof.

Embodiments of the present invention can provide a data reception device and a reception method which can avoid a risk that a program is kept incomplete by interruption of an updating operation.

The invention will now be described by way of example with reference to the accompanying drawings, throughout which like parts are referred to by like references, and in which:
FIG. 1 is a block diagram showing the arrangement of an embodiment of the present invention.
FIG. 2 is a flow chart showing an example of a control operation in an arrangement that does not embody the present invention.
FIG. 3 is a flow chart showing an example of a control operation in an embodiment of the present invention.
FIG. 4 is a block diagram showing an arrangement related to observation of a reception state in the embodiment of the present invention.
FIG. 5 is a schematic diagram showing a theoretical curve representing the relationship between a bit error rate and a C/N and a curve changed depending on an AGC reference voltage.
FIG. 6 is a schematic diagram showing an example of a form in which an AGC reference voltage is changed depending on a bit error rate.
FIG. 7 is a schematic diagram showing the outline of a typical digital broadcast system.

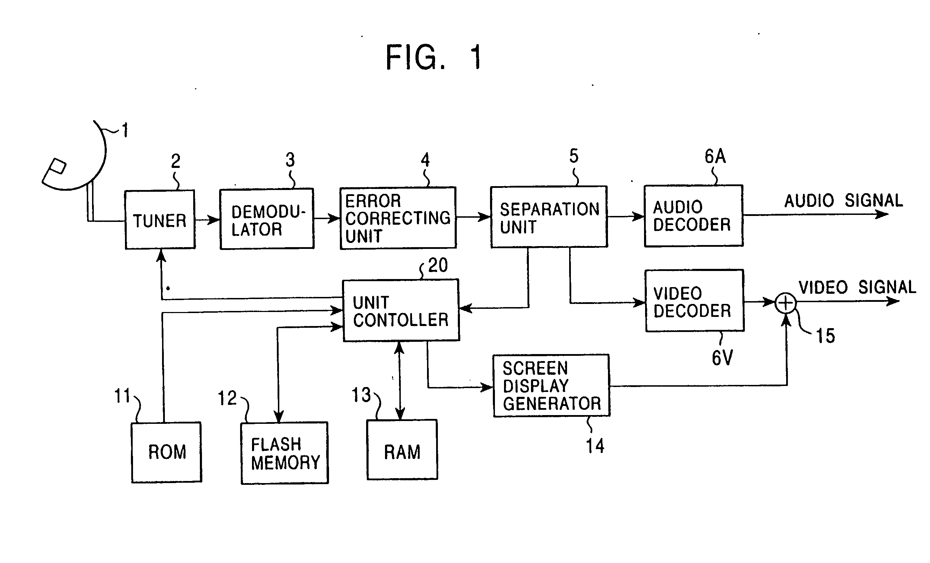

An embodiment of the present invention will be described below with reference to the drawings. FIG. 1 is a block diagram showing an embodiment of the present invention. A reception antenna indicated by 1 receives a radio wave from a communication satellite (or broadcast satellite). A converter connected to the reception antenna 1 down-converts the received signal into the first IF (Intermediate Frequency) signal having a predetermined frequency to output the signal to a tuner 2.

In the tuner 2, a reception channel (i.g., a reception transponder) set by a user is selected to generate the second IF signal. The second IF signal is supplied to a demodulator 3, and, e.g., demodulation of QPSK is performed. A demodulated output from the demodulator 3 is supplied to an error correcting unit 4. The error correcting unit 4 uses an error correction code, e.g., the Read-Solomon code or the Viterbi decode, to correct an error generated during transmission. An output (transport stream) from the error correcting unit 4 is supplied to a separation unit 5. Descramble for canceling scramble is performed between the error correcting unit 4 and the separation unit 5.

In the separation unit 5, the packet of a desired channel is separated from the transport stream, and the packet is separated into video data, audio data, and additional data (including program information) on the basis of information of a header portion. The video data is decoded by a video decoder 6V to generate a received video signal. The audio data is decoded by an audio decoder 6A to generate a received audio signal. The additional data separated by the separation unit 5 is supplied to a unit controller 10. An adder 15 adds a display signal to the decoded video data, and an output video signal from the adder 15 is displayed on a display (not shown). Similarly, the decoded audio signal is amplified by, e.g., an amplifier, to be output from a loudspeaker (not shown).

The unit controller 10 is to control the operation of the entire receiver, and is constituted by a microcomputer. The tuner 2, a ROM 11, a flash memory 12, a RAM 13, and a screen display generator 14 are coupled to the unit controller 10. In addition, bit error rate information is supplied from the error correcting unit 4 to the unit controller 10. Since a bit error rate is correlated to a C/N, the unit controller 10 can know a radio wave state (C/N) on the basis of the bit error rate information. An indication representing the degree of C/N can be displayed on the tube surface of a display by the unit controller 10 and the screen display generator 14.

Although not shown, a modem is connected to the unit controller 10 to transmit accounting information to a management system through a telephone line. In addition, an operation unit (keys on a front panel, a pointing device such as a tube-surface display or a mouse, a remote control system, and the like) for a user is also coupled to the unit controller 10. This operation unit includes keys and buttons operated in a downloading operation.

In the ROM 11, a program for download control is stored. The download control performed by the unit controller 10 is made on the basis of the program stored in the ROM 11. A program for general operation control is stored in the flash memory 12. The general operation control (i.e., control except for the download control) performed by the unit controller 10 is made on the basis of the program stored in the flash memory 12. The RAM 13 is used as a temporary storage unit used when the flash memory 12 is updated. The screen display generator 14 generates various display signals under the control of the unit controller 10. This display signal includes a signal for displaying the C/N. The display signal is supplied to the adder 15 to be superposed on the decoded video signal.

The program data for controlling the above receiver is transmitted as a broadcast wave, and the program data is received and downloaded in the flash memory 12 through the RAM 13, so that the program for controlling the receiver can be changed.

When the downloading is performed, the program data separated by the separation unit 5 is written in the RAM 13 in updating units (e.g., 64 kbytes). The RAM 13 holds the data until the updating process of one updating unit of the flash memory 12 is ended. The program data of one updating unit is read from the RAM 13, and then written in the flash memory 12. Until an updating process for a program to be downloaded is completed, the process of one updating unit is repeated.

In the MPEG2, a data stream is divided into units called packets to be transmitted. One packet is constituted by a 4-byte header portion and 184-byte pay-load portion, and has a size of 188 bytes. In the header portion, information of packets and information representing the relationship between the packets are stored. A PID serving as identification information of the packets is added to the header portion. More specifically, the same PID is added to transport packets generated by the same data stream. The destination (the video decoder 6V, the audio decoder 6A, or the unit controller 10) of the packets is designated by the PID.

For example, program data is transmitted according to a private section ruled by Systems (ISO 13818-1). A section in which the program data is stored is called a load section. In the section for program transmission, in addition to the program data, information for identifying the maker and model of a receiver, an ID representing the version of the program data, information representing a transponder to which required program data is transmitted, information of the length of the program data, and the like are stored. Therefore, the receiver can select required program data from these pieces of information to load it. More specifically, a transponder to which proper program data is transmitted is designated, and, on the basis of the maker, ID of model, version ID, and the like of the receiver, it is checked whether the program data transmitted from the transponder is proper or not. If the program data is proper, the program data is used as an object to be downloaded.

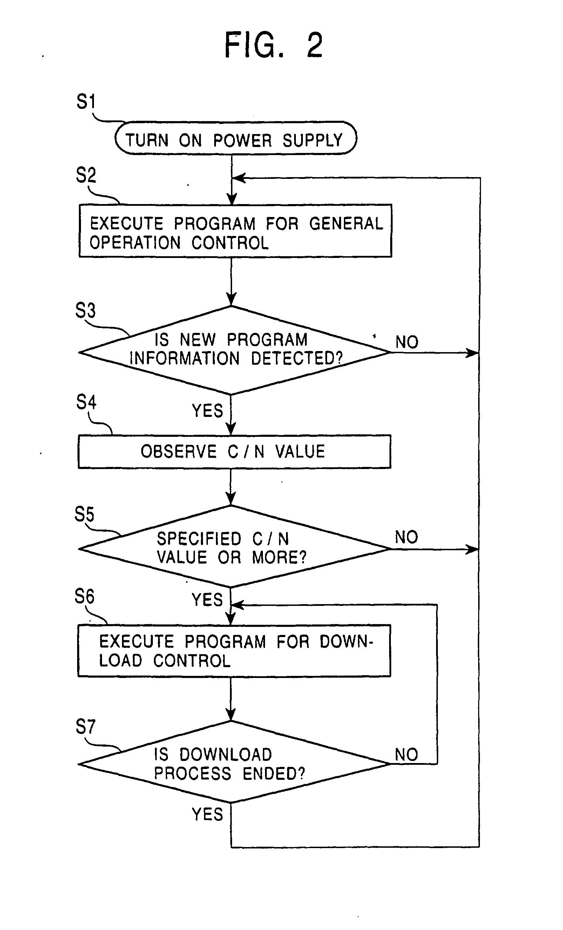

Before the download process is started, it is determined depending on the quality of a reception state whether the download process is performed. Such a process, as performed in arrangement not embodying the invention, will be described below with reference to the flow chart shown in FIG. 2. When a power supply is turned on first (step S1), a program for general operation control is executed (step S2). An example of the general operation is a reception channel switching operation.

In step S3, it is determined whether new program information is detected or not in the received signal. The transmission side repetitively transmits a plurality of programs depending on the maker, model, and version of the receiver. The determination in step S3 is performed with reference to the designation of the transponder, the maker, the ID of model, and the version ID which are included in the above transport stream. If new program information is detected, a C/N is observed for a predetermined period of time (e.g., about 10 seconds), and the average value of the C/N is calculated within the predetermined period of time (step S4).

It is determined whether the average value of the calculated C/N is a specified value or more (step S5). If YES in step S5, the flow shifts to step S6 to execute the program for download control. If NO in step S5, the flow returns to step S2. For example, when a threshold C/N is 6 dB, if the average value of the C/N is smaller than 10 dB, downloading is not performed.

It is determined in step S7 whether the download process has been ended or not. When all the programs to be updated are updated, the download process is ended. As the programs, a basic program having a routine for performing a basic process such as a boot routine and an application program for actually providing services are known. One of the programs may be downloaded, or both the programs may be downloaded. If it is determined in step S7 that the download process has been ended, the flow returns to step S2. If NO in step S7, the operations in steps S6 and S7 are repeated until the download process is ended.

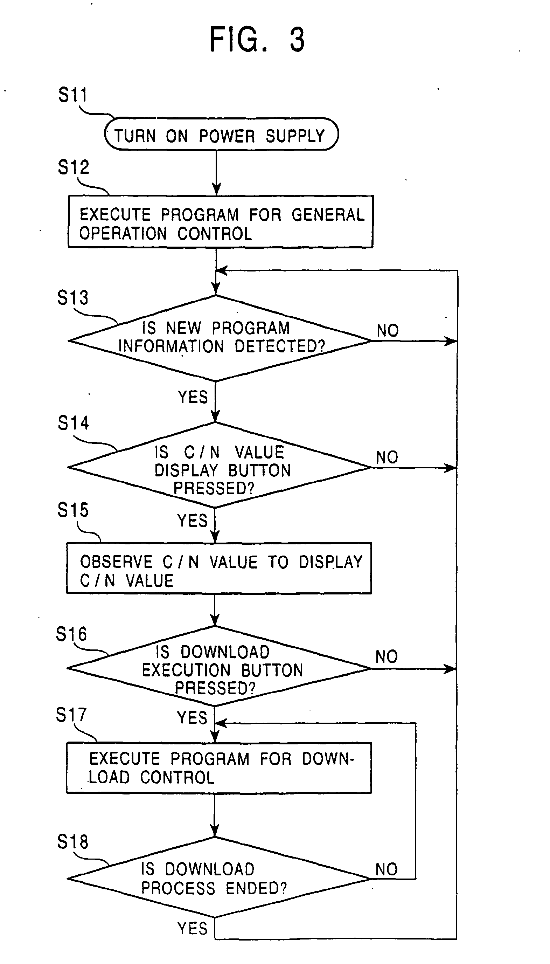

In the processes shown in FIG. 2, the download process is automatically performed when the C/N value, e.g., the average value is a specified value or more. However, in the embodiment of the invention, the C/N value is displayed on the tube surface of the display, so that a viewer sees this display to select whether the download process is started. The flow of these processes performed in this case is shown in the flow chart in FIG. 3. Steps S11 (turning on of the power supply), S12 (execution of the program for general operation control, and S13 (determination whether new program information is detected) in FIG. 3 are the same as those in steps S1, S2, and S3 in FIG. 2.

It is determined in step S14 whether a viewer presses a C/N value display button. For example, a button for designating the display of a C/N value, a button for designating execution of downloading, a C/N value display for displaying a C/N value as a number, and a program display for displaying a progress state of the download process as a percentage can be displayed on the tube surface of the display. Therefore, an actual operation for pressing a button is performed by movement of a cursor and clicking of a mouse. As a matter of course, command buttons or the like for remote control may be operated in place of the buttons displayed on the tube surface. When the C/N value display button is not pressed, the flow shifts to step S12. When this button is pressed, the C/N value is observed to be displayed (step S15).

The C/N value is also displayed on the tube surface. The C/N value is displayed with, e.g., a two-digit number. In this case, the C/N value calculated on the basis of a bit error rate is directly displayed, or a number obtained by replacing the C/N value is displayed such that a viewer can easily understand the radio wave state. Observation of the C/N value and display thereof are also used as antenna levels used when the direction of the antenna is adjusted.

A viewer sees the display of the C/N value to determine whether downloading is performed. If downloading is performed, the download execution button is pressed. In the manual of the receiver or the display on the tube surface, the relationship between the displayed C/N value and the reliability of completion of the download process is explained, and the viewer refers to the relationship to determined whether the download process is performed. When there is time enough to permit interruption of the download process caused by degradation of the radio wave state, even if the display of the C/N value is not too preferable, the download execution button is pressed. On the other hand, when time for the download process is avoided from being elongated by the interruption of the download process, the execution button is pressed after it is confirmed that the display of the C/N value is preferable.

In step S16, it is determined whether the download execution button is pressed. If the download execution button is pressed, execution of the program for download control (step S17) is performed to check whether the download process is ended (step S18). The processes in steps S17 and S18 are the same as those in steps S6 and S7 in FIG. 2.

According to the control method shown in the flow chart in FIG. 3, after the degree of risk that a download process is interrupted is notified to a viewer, the viewer is caused to select whether the download process is started. Although only one of the control method shown in FIG. 2 and the control method shown in FIG. 3 is satisfactorily used, a viewer may select one of the control methods which can be active.

One example of a method of calculating a C/N by using a bit error rate of the error correcting unit 4 will be described below. As one method, a method in which errors detected in a modulation output are counted to display the count value can be used. According to this method, when the C/N is preferable, time in which one error can be observed is too long. For example, when the C/N is 16 dB, a bit error rate (theoretical value) is 1 x 10⁻⁸, and time required to observe one error is 2.5 sec. When the C/N is 17 dB, a bit error rate (theoretical value) is 1.4 x 10⁻¹⁰, and time required to observe one error is 179 sec. When the C/N is 18 dB, the bit error rate (theoretical value) is 8 x 10⁻²³, and time required to observe one error is 8.7 hours.

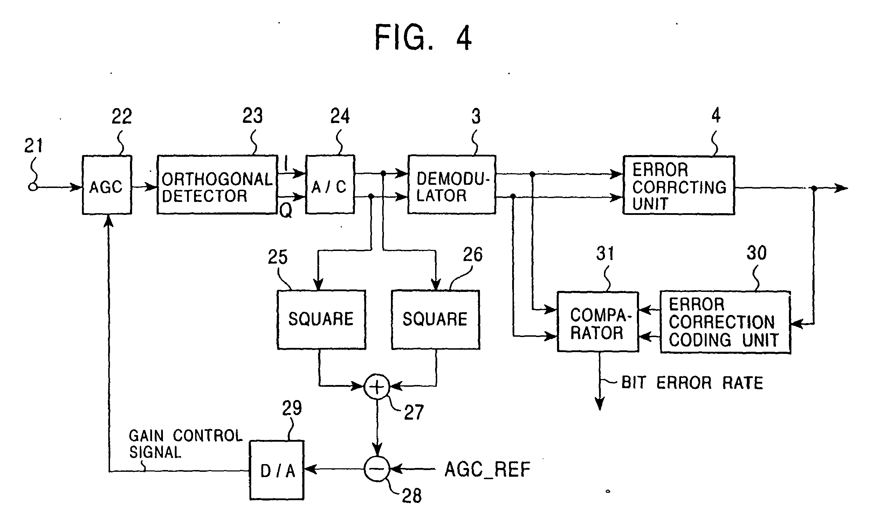

A C/N value display device is proposed which can solve or alleviate the problem. The display device will be described below with reference to FIG. 4. The same reference numerals as in FIG. 1 denote the same parts in FIG. 4. Referring to FIG. 4, an IF signal from a tuner is supplied to an input terminal indicated by 21, and a gain is controlled by an AGC amplifier 22. A gain control signal for the AGC amplifier is generated from the output of a D/A converter 29.

An output signal from the AGC amplifier 22 is supplied to an orthogonal detector 23. The orthogonal detector 23 orthogonally detects the output signal from the AGC amplifier 22 to generate analog-base band signals (called an I signal and a Q signal) along an I axis and a Q axis. The I signal and the Q signal are converted into digital signals by an A/D converter 24. The digitized I signal and the digitized Q signal are demodulated by a QPSK demodulator 3. A demodulated signal is supplied to an error correcting unit 4 to perform error correction.

The digitized I signal and the digitized Q signal from the A/D converter 24 are supplied to square-law arithmetic units 25 and 26, respectively. An adder 27 adds outputs from the square-law arithmetic units 25 and 26 to each other. An output from the adder 27 is supplied to a subtractor 28 to be subtracted from an AGC reference voltage (AGC_REF) from the unit controller 10. An output signal from the subtractor 28 is supplied to the D/A converter 29. A gain control signal from the D/A converter 29 is supplied to the AGC amplifier 22.

The gain of the AGC amplifier 22 is feedback-controlled such that the sum of squares of the I signal and the Q signal output from the A/D converter 24 is equal to the AGC reference voltage. Therefore, when the AGC reference voltage is changed, the amplitude of an input of the A/D converter 24 is larger or smaller than a proper value. For example, when the AGC reference voltage is decreased, the amplitude of the input of the A/D converter 24 is made smaller than the proper value.

In addition, the data subjected to error correction and output from the error correcting unit is supplied to an error correction coding unit 30. The error correction coding unit 30 performs error correction coding again. An output from the error correction coding unit 30 is supplied to a comparator 31 for collation. Data which is not subjected to error correction is supplied to the comparator 31. Therefore, the comparator 31 can detect an incoincidence bit as an error bit by collation. The error bit detected as described above is supplied from the comparator 31 to the unit controller 10 as a bit error rate.

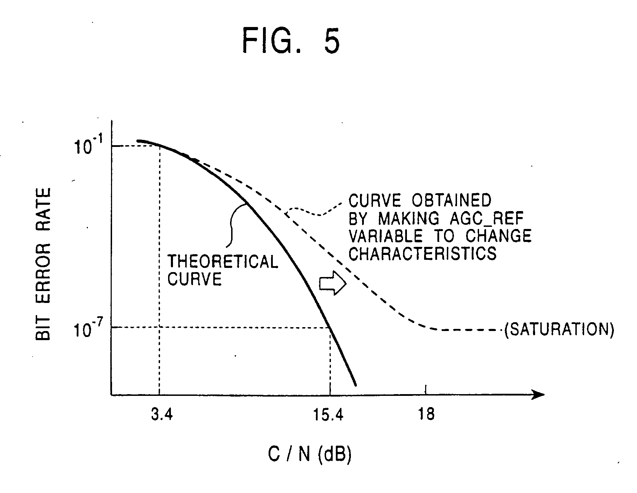

A solid curve in FIG. 5 indicates the relationship (theoretical value) between a C/N and a bit error rate. As is apparent from FIG. 5, the C/N and the bit error rate are correlated to each other. However, as described above, when a transmission rate is represented by R (bps), and the bit error rate is represented by E, time required to detect one error is represented by 1/(R-E) [sec]. When the C/N is preferable, the time becomes long disadvantageously.

According to the value of the bit error rate received by the unit controller 10, as indicated by a broken line in FIG. 5, (AGC_REF) is made variable to change the characteristics. That is, when the C/N is high, noise is equivalently added to apparently decrease the C/N. More specifically, as the bit error rate decreases, the level of the AGC_REF is decreased, the gain of the AGC amplifier 22 is decreased (the input amplitude value of the A/D converter 24 is made smaller than the proper value), and quantization noise is increased, thereby apparently decrease the C/N.

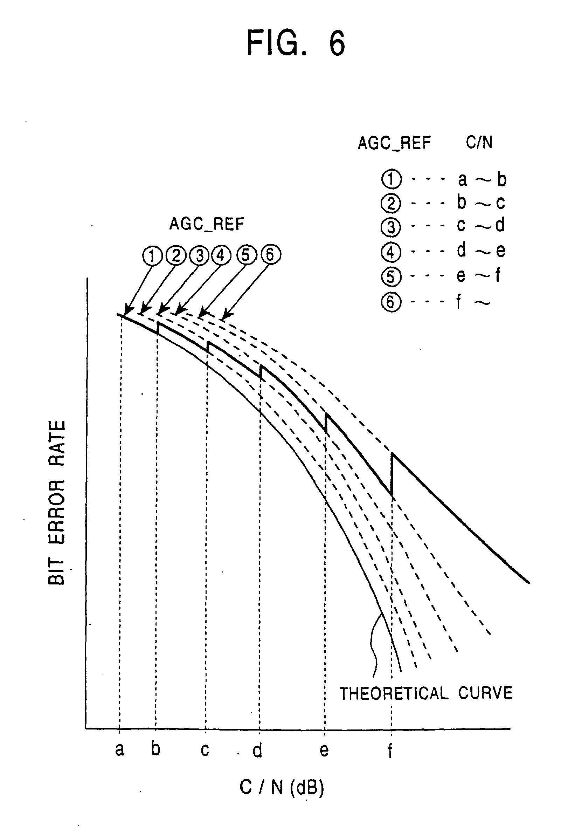

FIG. 6 shows one form in which the AGC REF is changed depending on a bit error rate. In FIG. 6, circle 1 denotes a theoretical curve, and circle 2 to circle 6 denote curves obtained by shifting the theoretical curve circle 1 in the right direction on the drawing. The shift in the right direction is an operation for decreasing the AGC_REC to apparently decrease a C/N. As the C/N increases, a selected curve is sequentially switched to circle 2, circle 3, circle 4, circle 5, and circle 6. With this process, as shown in FIG. 5, the C/Ns corresponding to the bit error rates of 10⁻¹ to 10⁻⁷ are converted from (3.4 dB to 15.4 dB) (theoretical values) to (3.4 dB to 18 dB). In addition, the bit error rate is designed to be saturated up to 10⁻⁷. According to the above method, the range in which a C/N can be displayed by a bit error rate can be increased.

Observation of a C/N based on a bit error rate is one method of checking the quality of a reception state. A method such as a method of referring to the level of a gain control signal from an AGC amplifier may also be used.

As has been described above, the following risk can be avoided. That is, when a download process is interrupted by degradation of a radio wave state caused by rain or the like, a program is kept incomplete. Furthermore, after a risk that the program may be kept incomplete is notified to a viewer, the viewer can selectively perform a download process.

## Claims

1. A data reception device designed to receive multiplexed digital data, the device comprising:
means for detecting the presence of program update data in said multiplexed digital data, the program update data being for updating a control program stored in a storage means of the data reception device;
means responsive to detection of the presence of program update data for detecting the quality of reception of the multiplexed digital data;
means for displaying the detected quality of reception;
designating means enabling a user, on viewing the displayed quality of reception, to designate that the program update data is to be downloaded to said storage means of said data reception device;
means responsive to the output of the designating means for extracting the program update data from said multiplexed digital data;
means for storing the extracted program update data in said storage means; and means for executing the updated control program for control of said data reception device.

2. A data reception device according to claim 1, designed to receive multiplexed digital data transmitted by digital television broadcast.

3. A data reception method designed to receive multiplexed digital data, the method comprising:
detecting the presence of program update data in said multiplexed digital data, the program update data being for updating a control program stored in a storage means of a data reception device;
detecting the quality of reception of said multiplexed digital data in response to detecting the presence of said program update data;
displaying the detected quality of reception;
designating by a user, on viewing the displayed quality of reception, that the program update data is to be downloaded to said storage means of said data reception device;
extracting, in response to said designation by the user, the program update data from the multiplexed digital data;
storing the extracted program update data in said storage means; and
executing the updated control program for control of said data reception device.

4. A data reception method according to claim 3, designed to receive multiplexed digital data transmitted by digital television broadcast.

## Patentansprüche

1. Datenempfangseinrichtung, die ausgebildet ist, digitale Multiplexdaten zu empfangen, wobei die Einrichtung aufweist:
eine Einrichtung zum Erfassen des Vorhandenseins von Programmaktualisierungsdaten in den digitalen Multiplexdaten, wobei die Programmaktualisierungsdaten dazu dienen, ein Steuerprogramm zu aktualisieren, welches in einer Speichereinrichtung der Datenempfangseinrichtung gespeichert ist;
eine Einrichtung, welche auf die Erfassung des Vorhandenseins von Programmaktualisierungsdaten anspricht, um die Empfangsqualität der digitalen Multiplexdaten zu erfassen;
eine Einrichtung zum Anzeigen der erfassten Empfangsqualität;
eine Bestimmungseinrichtung, die es einem Benutzer ermöglicht, beim Betrachten der Anzeigeempfangsqualität zu bestimmen, dass die Programmaktualisierungsdaten in die Speichereinrichtung der Datenempfangseinrichtung herunterzuladen sind;
eine Einrichtung, welche auf die Ausgabe der Bestimmungseinrichtung anspricht, um die Programmaktualisierungsdaten von den digitalen Multiplexdaten zu extrahieren;
eine Einrichtung zum Speichern der extrahierten Programmaktualisierungsdaten in der Speichereinrichtung; und eine Einrichtung zum Ausführen des Aktualisierungssteuerprogramms zur Steuerung der Datenempfangseinrichtung.

2. Datenempfangseinrichtung nach Anspruch 1, die ausgebildet ist, die digitalen Multiplexdaten, welche über digitalen Fernseh-Rundfunk übertragen werden, zu empfangen.

3. Datenempfangsverfahren, welches ausgebildet ist, die digitalen Multiplexdaten zu empfangen, wobei das Verfahren umfasst:
Erfassen des Vorhandenseins von Programmaktualisierungsdaten in den digitalen Multiplexdaten, wobei die Programmaktualisierungsdaten dazu dienen, ein Steuerprogramm, welches in einer Speichereinrichtung der Datenempfangseinrichtung gespeichert ist, zu aktualisieren;
Erfassen der Empfangsqualität der digitalen Multiplexdaten als Antwort auf das Erfassen des Vorhandenseins der Programmaktualisierungsdaten;
Anzeigen der ermittelten Empfangsqualität;
Bestimmen - durch einen Benutzer - beim Betrachten der Anzeigeempfangsqualität, dass die Programmaktualisierungsdaten in die Speichereinrichtung der Datenempfangseinrichtung herunterzuladen sind;
Extrahieren - als Antwort auf die Bestimmung durch den Benutzer - der Programmaktualisierungsdaten von den digitalen Multiplexdaten;
Speichern der extrahierten Programmaktualisierungsdaten in der Speichereinrichtung; und
Ausführen des aktualisierten Steuerprogramms zum Steuern der Datenempfangseinrichtung.

4. Datenempfangsverfahren nach Anspruch 3, welches ausgebildet ist, die digitalen Multiplexdaten, welche über digitalen Fernseh-Rundfunk übertragen werden, zu empfangen.

## Revendications

1. Dispositif de réception de données conçu pour recevoir des données numériques multiplexées, le dispositif comprenant :
un moyen destiné à détecter la présence de données de mise à jour de programme dans lesdites données numériques multiplexées, les données de mise à jour de programme étant destinées à mettre à jour un programme de commande mémorisé dans un moyen de mémorisation du dispositif de réception de données,
un moyen réactif à la détection de la présence de données de mise à jour de programme pour détecter la qualité de réception des données numériques multiplexées,
un moyen destiné à afficher la qualité de réception détectée,
un moyen d'indication permettant à un utilisateur, lors de la visualisation de la qualité de réception affichée, d'indiquer que les données de mise à jour de programme doivent être téléchargées vers ledit moyen de mémorisation dudit dispositif de réception de données,
un moyen réactif à la sortie du moyen d'indication pour extraire les données de mise à jour de programme desdites données numériques multiplexées,
un moyen destiné à mémoriser les données de mise à jour de programme extraites dans ledit moyen de mémorisation et un moyen destiné à exécuter le programme de commande mis à jour pour la commande dudit dispositif de réception.

2. Dispositif de réception de données selon la revendication 1, conçu pour recevoir des données numériques multiplexées transmises par diffusion de télévision numérique.

3. Procédé de réception de données conçu pour recevoir des données numériques multiplexées, le procédé comprenant les étapes consistant à :
détecter la présence de données de mise à jour de programme dans lesdites données numériques multiplexées, les données de mise à jour de programme étant destinées à mettre à jour un programme de commande mémorisé dans un moyen de mémorisation d'un dispositif de réception de données,
détecter la qualité de réception desdites données numériques multiplexées en réponse à la détection de la présence desdites données de mise à jour de programme,
afficher la qualité de réception détectée,
faire indiquer par un utilisateur, lors de la visualisation de la qualité de réception affichée, que les données de mise à jour de programme doivent être téléchargées vers ledit moyen de mémorisation dudit dispositif de réception de données,
extraire, en réponse à ladite indication par l'utilisateur, les données de mise à jour de programme des données numériques multiplexées,
mémoriser les données de mise à jour de programme extraites dans ledit moyen de mémorisation, et
exécuter le programme de commande mis à jour pour la commande dudit dispositif de réception de données.

4. Procédé de réception de données selon la revendication 3, conçu pour recevoir des données numériques multiplexées transmises par diffusion de télévision numérique.
